# EUROPÄISCHE PATENTANMELDUNG

(11) **EP 4 789 891 A1**
(43) Veröffentlichungstag der Anmeldung: **12.08.2026**
(21) Anmeldenummer: 25155922.5
(22) Anmeldetag: 05.02.2025
(51) Int. Cl.: B60K 35/22, B60K 35/233, B60K 35/28, B60K 35/81

(54) **VERFAHREN ZUM ANZEIGEN MINDESTENS EINES VIRTUELLEN TRÄGERS AUF MINDESTENS EINER ANZEIGEFLÄCHE EINES FAHRZEUGS, EINE VORRICHTUNG ZUR DURCHFÜHRUNG EINES SOLCHEN VERFAHRENS SOWIE EIN FAHRZEUG, AUFWEISEND EINE SOLCHE VORRICHTUNG**

(71) Anmelder: VOLKSWAGEN AG, 38440 Wolfsburg (DE)
(72) Erfinder: Steiner, Jan, 38440 Wolfsburg (DE); Kaste, Jonas, 38440 Wolfsburg (DE); Stahl, Felix, 38440 Wolfsburg (DE)

(57) **Zusammenfassung**

Um ein Verfahren zum Anzeigen mindestens eines virtuellen Trägers (13) auf mindestens einer Anzeigefläche (10) eines Fahrzeugs (11) durchzuführen, durch welches die Wahrnehmung von Fahrzeugbewegungen verbessern und das Auftreten von Kinetose reduziert wird, wird vorgeschlagen, dass das Verfahren die Schritte:
a) Erfassung von Daten mittels mindestens eines Sensors des Fahrzeugs (11);
b) Anzeige zumindest eines Teils der Daten auf der mindestens einen Anzeigefläche (10, 10a) des Fahrzeugs,
c) Festlegung einer Position eines virtuellen Trägers (13) und eines Abschnittsbereichs (12) auf der mindestens einen Anzeigefläche (10),
d) Wiedergabe von mindestens einer Anwendung innerhalb des virtuellen Trägers (13) und/oder innerhalb des Abschnittsbereichs (12) der Anzeigefläche (10, 10a), und
e) Kontinuierliche Anpassung einer Position des virtuellen Trägers (13) und/oder des Abschnittsbereichs (12) der Anzeigefläche (10), umfasst.

## Beschreibung

Die vorliegende Erfindung betrifft ein Verfahren zum Anzeigen mindestens eines virtuellen Trägers auf mindestens einer Anzeigefläche eines Fahrzeugs, eine Vorrichtung zur Durchführung eines solchen Verfahrens sowie ein Fahrzeug, aufweisend eine solche Vorrichtung.

Ähnliche Verfahren sind im Stand der Technik beispielsweise aus den folgenden Dokumenten bekannt.

Die DE 10 2018 213 745 A1 betrifft ein Verfahren zum Betreiben eines Infotainmentsystems für einen Passagier in einem Ego-Fahrzeug, bei dem Verkehrsdaten über einen vor dem Ego-Fahrzeug liegenden Streckenabschnitt erfasst werden, wobei die Verkehrsdaten zumindest eine Bewegung eines vorausfahrenden Fahrzeugs relativ zu dem Ego-Fahrzeug umfassen. Es wird eine Anzeige erzeugt und auf einer Anzeigefläche eines dem Passagier zugeordneten Nutzergeräts ausgegeben, wobei die Anzeige einen Medienausgabebereich umfasst. Dabei umfasst die Anzeige ferner ein Indikatorelement, das einen Parameter aufweist, der in Abhängigkeit von den Verkehrsdaten erzeugt wird, wobei das Indikatorelement zumindest dann erzeugt wird, wenn eine Beschleunigung des vorausfahrenden Fahrzeugs erfasst wird. Die Erfindung betrifft ferner ein Infotainmentsystem für einen Passagier in einem Ego-Fahrzeug.

Die DE 10 2016 206 154 A1 betrifft ein Verfahren zum Generieren eines Bildsignals zum Minimieren von Reiseübelkeit für zumindest einen Passagier eines Fahrzeugs. Das Verfahren umfasst einen Schritt des Einlesens, in dem Videodaten von einer Schnittstelle zu einer Fahrzeugkamera des Fahrzeugs eingelesen werden, wobei die Videodaten eine bewegte optische Darstellung einer Umgebung des Fahrzeugs repräsentieren. Weiterhin umfasst das Verfahren einen Schritt des Erzeugens, in dem das Bildsignal zur Ausgabe an eine Schnittstelle zu zumindest einem in dem Fahrzeug angeordneten Anzeigemittel erzeugt wird, das Bildsignal wird dabei unter Verwendung der Videodaten und weiterer Videodaten erzeugt. Das Bildsignal ist dazu ausgebildet, um gleichzeitig eine Anzeige der Videodaten auf zumindest einem Teilbereich des Anzeigemittels und eine Anzeige der weiteren Videodaten auf zumindest einem weiteren Teilbereich des Anzeigemittels zu bewirken.

Die DE 10 2019 220 040 A1 betrifft ein Verfahren zum Vorbeugen von Kinetose beim Betrachten eines auf einem Bildschirm angezeigten Bildinhalts in einem fahrenden Fahrzeug, insbesondere einem hochautomatisiert fahrenden Fahrzeug. Das Verfahren umfasst einen Schritt des Einlesens und einen Schritt des Ermittelns. Im Schritt des Einlesens werden ein Trajektorienplanungssignal, das eine geplante Trajektorie des Fahrzeugs repräsentiert, und ein Anzeigesignal, das zumindest eine auf dem Bildschirm angezeigte Applikation repräsentiert, eingelesen. Im Schritt des Ermittelns wird unter Verwendung des Trajektorienplanungssignals und des Anzeigesignals ein Bildbewegungssignal zum Verschieben eines als Hintergrund für den angezeigten Bildinhalt dargestellten Hintergrundbildinhalts gegenüber dem angezeigten Bildinhalt der zumindest einen auf dem Bildschirm angezeigten Applikation ermittelt, um Kinetose beim Betrachten des auf dem Bildschirm angezeigten Bildinhalts in dem fahrenden Fahrzeug vorzubeugen.

Insbesondere bei autonom fahrenden Fahrzeugen schauen Fahrer und Beifahrer nicht mehr zwangsweise auf die vorausliegende Straße. Dies kann dazu führen, dass sie die sogenannte Kinetose, auch als Reisekrankheit bekannt, empfinden. Diese entsteht, wenn das Gleichgewichtsorgan im Innenohr Bewegungen wahrnimmt, die nicht mit den visuellen Eindrücken übereinstimmen. Durch die Darstellung von Fahrdaten auf einer Anzeigefläche wird diese verringert, da unterbewusst die voraussichtliche Bewegung des Fahrzeugs wahrgenommen wird.

Der Erfindung liegt die Aufgabe zugrunde, ein Verfahren zur Verfügung zu stellen, das es ermöglicht, Daten auf einer Anzeigefläche eines Fahrzeugs darzustellen, um die Wahrnehmung der Fahrzeugbewegungen zu verbessern und das Auftreten von Kinetose zu reduzieren.

Das erfindungsgemäße Verfahren zum Anzeigen mindestens eines virtuellen Trägers auf mindestens einer Anzeigefläche eines Fahrzeugs umfasst die folgenden Schritte:
a) Erfassung von Daten mittels mindestens eines Sensors des Fahrzeugs. Beispielsweise kann der mindestens eine Sensor eine Kamera, ein Radarsensor, Lidarsensor, Ultraschallsensor, und/oder ein Infrarotsensor sein.
b) Anzeige zumindest eines Teils der Daten auf der mindestens einen Anzeigefläche des Fahrzeugs. Die Anzeigefläche kann beispielsweise ein Display, ein Head-Up-Display, eine Projektionsfläche oder eine Kombination davon sein.
c) Festlegung einer Position eines virtuellen Trägers und eines Abschnittsbereichs auf der mindestens einen Anzeigefläche. Der virtuelle Träger kann beispielsweise ein Fenster, ein Rahmen, eine Box, eine Blase oder eine andere grafische Darstellung sein, die dazu dient, bestimmte Informationen oder Anwendungen zu enthalten oder hervorzuheben. Der Abschnittsbereich kann ein Teil der Anzeigefläche sein, der für die Darstellung des virtuellen Trägers und/oder der darin enthaltenen Informationen oder Anwendungen reserviert ist.
d) Wiedergabe von mindestens einer Anwendung innerhalb des virtuellen Trägers und/oder innerhalb des Abschnittsbereichs der Anzeigefläche. Die Anwendung kann beispielsweise eine Karte, eine Navigationsanweisung, eine Geschwindigkeitsanzeige, eine Warnmeldung, eine Wetterinformation, eine Verkehrsinfo, eine Multimedia-Anwendung, eine Kommunikationsanwendung, eine Fahrzeugsteuerungsanwendung oder eine andere Anwendung sein, die für den Fahrer und/oder einen Insassen des Fahrzeugs nützlich oder interessant sein könnte, wobei Fahrer und/oder Insasse des Fahrzeugs im Folgenden synonym verwendet werden.
e) Kontinuierliche Anpassung einer Position des virtuellen Trägers und/oder des Abschnittsbereichs der Anzeigefläche. Die Position des virtuellen Trägers und/oder des Abschnittsbereichs kann beispielsweise in Abhängigkeit von der Bewegung des Fahrzeugs, der Blickrichtung des Fahrers, der Priorität der angezeigten Informationen oder Anwendungen, der verfügbaren Anzeigefläche, der Fahrzeugkonfiguration oder anderen Faktoren angepasst werden.

Das erfindungsgemäße Verfahren ermöglicht eine flexible und effiziente Nutzung der Anzeigefläche in einem Fahrzeug, indem es die Anzeige von Informationen und Anwendungen in einem virtuellen Träger ermöglicht, dessen Position auf der Anzeigefläche kontinuierlich angepasst werden kann. Dies kann dazu beitragen, die Ablenkung des Fahrers zu minimieren, die Sicherheit zu erhöhen und das Fahrerlebnis zu verbessern. Für Insassen des Fahrzeugs, welche nicht aktiv auf die Straße schauen, werden außerdem zusätzlich Kinetose-Symptome verringert und/oder vermieden. Der virtuelle Träger kann als Overlay in dem Abschnittsbereich auf der mindestens einen Anzeigefläche des Fahrzeugs dargestellt werden. Ein Overlay ist eine grafische Schicht und/oder ein Bild, das über einem anderen Bild oder einer anderen Schicht platziert wird. In diesem Kontext wird das Overlay auf der Anzeigefläche des Fahrzeugs platziert und dient als virtueller Träger für die Anzeige von Informationen und/oder Anwendungen.

Der virtuelle Träger kann dabei verschiedenste Formen aufweisen. Dies bedeutet, dass der virtuelle Träger nicht auf eine bestimmte Form oder Größe beschränkt ist. Er kann beispielsweise rechteckig, rund, oval, polygonal oder in jeder anderen Form sein, die für die Darstellung der gewünschten Informationen oder Anwendungen geeignet ist. Die Form des virtuellen Trägers kann auch in Abhängigkeit von den angezeigten Informationen oder Anwendungen, der verfügbaren Anzeigefläche, der Fahrzeugkonfiguration oder anderen Faktoren angepasst werden.

Darüber hinaus kann der virtuelle Träger auch Objekte imitieren, welche auch im gewöhnlichen Straßenverkehr auf der Straße sein können. Dies kann bedeuten, dass der virtuelle Träger so gestaltet sein kann, dass er wie ein reales Objekt aussieht, das typischerweise auf der Straße zu finden ist, wie beispielsweise ein Fahrzeug und/oder ein anderes Objekt. Diese Funktion trägt dazu bei, die Realitätsnähe der angezeigten Informationen oder Anwendungen zu erhöhen und das Fahrerlebnis zu verbessern.

Beispielsweise umfassen die Daten Bilddaten. Der mindestens eine Sensor kann eine Kamera umfassen, insbesondere eine Frontkamera. Diese Bilddaten werden von einer oder mehreren Kameras des Fahrzeugs erfasst. Die Kamera kann beispielsweise eine Frontkamera, eine Rückfahrkamera, eine oder mehrere Seitenkameras, eine Innenraumkamera oder andere Kameras sein. Die Bilddaten umfassen bevorzugterweise ein Bild oder ein Video der Umgebung des Fahrzeugs, der Fahrbahn, des Verkehrs, der Insassen des Fahrzeugs oder anderer relevanter Objekte oder Szenen. Beispielsweise werden die Bilddaten in Echtzeit erfasst und angezeigt. Bevorzugterweise werden die Bilddaten verarbeitet, beispielsweise um bestimmte Objekte oder Merkmale zu erkennen, zu verfolgen und/oder hervorzuheben, und/oder um zusätzliche Informationen oder Anwendungen zu generieren. Beispielsweise liegen die Bilddaten in verschiedenen Formaten, Auflösungen, Farbtiefen oder anderen Spezifikationen vor. Beispielsweise sind die Bilddaten aus mehreren Bildern oder Videos zusammengesetzt, die von verschiedenen Kameras und/oder zu verschiedenen Zeiten erfasst wurden. Die Bilddaten können auch mit anderen Daten kombiniert und/oder verknüpft werden, beispielsweise mit Sensordaten, Fahrzeugdaten, Kartendaten, Verkehrsdaten, Wetterdaten, Benutzerdaten und/oder anderen Daten.

Die Frontkamera kann beispielsweise an der Vorderseite des Fahrzeugs angebracht sein und dazu dienen, die Fahrbahn und die Umgebung vor dem Fahrzeug zu erfassen. Die Frontkamera kann beispielsweise eine Weitwinkelkamera, eine Telekamera, eine Infrarotkamera, eine Stereokamera, eine 360-Grad-Kamera oder eine andere Art von Kamera sein. Die Frontkamera kann in der Lage sein, Bilder oder Videos in verschiedenen Auflösungen, Farbtiefen, Bildraten oder anderen Spezifikationen zu erfassen. Die Frontkamera kann auch in der Lage sein, verschiedene Arten von Bilddaten zu erfassen, beispielsweise Farbbilder, Graustufenbilder, Tiefenbilder, Infrarotbilder, Wärmebilder oder andere Arten von Bilddaten. Die Frontkamera kann auch mit anderen Sensoren oder Systemen des Fahrzeugs verbunden oder integriert sein, beispielsweise mit einem Radarsensor, einem Lidarsensor, einem Ultraschallsensor, einem GPS-Sensor, einem Fahrzeugsteuerungssystem, einem Fahrerassistenzsystem, einem Infotainmentsystem und/oder einem anderen Sensor und/oder System.

Die Anzeige zumindest eines Teils der Daten kann fahrzeugfest erfolgen. Dies bedeutet, dass die Anzeige der Daten auf einer Anzeigefläche erfolgt, die fest mit dem Fahrzeug verbunden ist und jede Bewegung des Fahrzeugs mitmacht. Die Anzeigefläche kann beispielsweise ein Display, ein Head-Up-Display, eine Projektionsfläche oder eine Kombination davon sein, die in der Fahrzeugkabine, beispielsweise auf einem Armaturenbrett, in einer Mittelkonsole, auf einem Lenkrad, auf einer Windschutzscheibe und/oder an einer anderen geeigneten Stelle im Fahrzeug, angebracht ist. Die Anzeigefläche kann auch Teil eines Infotainmentsystems, eines Navigationssystems, eines Fahrerassistenzsystems, eines Fahrzeugsteuerungssystems oder eines anderen Systems und/oder Geräts im Fahrzeug sein. Die Anzeigefläche kann verschiedene Größen, Formen, Auflösungen, Farbtiefen, Helligkeiten, Kontraste und/oder andere Spezifikationen aufweisen. Die Anzeigefläche kann auch verschiedene Arten von Benutzeroberflächen, Menüs, Steuerelementen, Symbolen, Grafiken, Texten, Animationen und/oder andere visuelle Elemente anzeigen. Die Anzeigefläche kann berührungsempfindlich sein und Touch-Gesten, Multi-Touch-Gesten, Druckempfindlichkeit und/oder andere Touch-Funktionen unterstützen. Die Anzeigefläche kann haptisches Feedback, akustisches Feedback, optisches Feedback und/oder anderes Feedback bereitstellen. Die Anzeigefläche kann mit anderen Sensoren, Systemen und/oder Geräten im Fahrzeug und/oder außerhalb des Fahrzeugs verbunden und/oder integriert sein, beispielsweise mit Kameras, Radarsensoren, Lidarsensoren, Ultraschallsensoren, GPS-Sensoren, Mikrofonen, Lautsprechern, Steuergeräten, Netzwerken, Kommunikationssystemen, Speichergeräten, Prozessoren, Softwareanwendungen und/oder anderen Sensoren, Systemen und/oder Geräten.

Insbesondere wird durch die Anzeige der Daten, insbesondere der Bilddaten, auf der fest mit dem Fahrzeug verbundenen Anzeigefläche für den Betrachter der Eindruck erzeugt, dass es sich bei den angezeigten Daten um ein reales Fenster des Fahrzeugs handelt. Dies bedeutet, dass die Darstellung der Daten so realistisch und überzeugend ist, dass ein Betrachter das Gefühl hat, durch ein tatsächliches Fenster des Fahrzeugs zu schauen, anstatt auf eine digitale Anzeige.

Die Darstellung des virtuellen Trägers kann umgebungsfest erfolgen. Dies bedeutet, dass die Position des virtuellen Trägers auf der Anzeigefläche in Bezug auf die Umgebung des Fahrzeugs fest ist. Beispielsweise kann der virtuelle Träger so positioniert sein, dass er immer einen bestimmten Teil der Fahrbahn, eines anderen Fahrzeugs oder eines anderen Objekts in der Umgebung des Fahrzeugs anzeigt. Die umgebungsfeste Position des virtuellen Trägers kann automatisch durch das Fahrzeug eingestellt werden. Die umgebungsfeste Position des virtuellen Trägers kann in Abhängigkeit von der Bewegung des Fahrzeugs, der Blickrichtung des Fahrers, und/oder anderen Faktoren angepasst werden. Beispielsweise würde der virtuelle Träger bei einer Linkskurve innerhalb des Abschnittsbereichs nach links verschoben werden, so dass der Betrachter auch das Gefühl bekommt, nach links zu fahren. Dies bedeutet, dass die Darstellung des virtuellen Trägers nicht nur umgebungsfest ist, sondern auch in direkter Beziehung zu einer umgebenden Landschaft und/oder einer vorausliegenden Fahrbahn des Fahrzeugs steht.

Diese Kopplung kann dazu beitragen, die Kinetose, auch bekannt als Reisekrankheit, weiter zu verringern. Kinetose tritt auf, wenn das Gehirn widersprüchliche Informationen über die Bewegung des Körpers erhält. Indem der virtuelle Träger an die Umgebung gekoppelt wird, kann eine konsistente visuelle Referenz bereitgestellt werden, die dazu beitragen kann, diese widersprüchlichen Informationen zu minimieren. Dies kann dazu beitragen, das allgemeine Fahrerlebnis zu verbessern, indem es die Wahrscheinlichkeit von Unwohlsein und Ablenkung während der Fahrt verringert.

Darüber hinaus könnte diese Kopplung an die Umgebung auch dazu beitragen, die Orientierung des Fahrers zu verbessern. Indem der virtuelle Träger immer an die Umgebung gekoppelt ist, kann der Fahrer eine konstante visuelle Referenz haben, die ihm hilft, seine Position in Bezug auf die Umgebung besser zu verstehen. Dies kann besonders nützlich sein in Situationen, in denen die Umgebung des Fahrzeugs schnell wechselt, wie zum Beispiel beim Fahren auf einer kurvigen Straße oder bei schlechten Wetterbedingungen.

Die Festlegung der Position des virtuellen Trägers und des Abschnittsbereichs auf der mindestens einen Anzeigefläche kann abhängig von einer Bahnplanung des Fahrzeugs erfolgen. Die Bahnplanung kann beispielsweise auf Basis von GPS-Daten, Kartenmaterial, Verkehrsdaten, Sensordaten, Fahrzeugdaten und/oder anderen relevanten Daten erfolgen. Die Bahnplanung kann beispielsweise den voraussichtlichen Fahrweg des Fahrzeugs, die voraussichtliche Geschwindigkeit, die voraussichtliche Fahrtrichtung, die voraussichtliche Fahrzeit oder andere Aspekte der geplanten Fahrt umfassen. Die Position des virtuellen Trägers und des Abschnittsbereichs kann so festgelegt werden, dass sie die Sicht des Fahrers auf wichtige Bereiche der geplanten Fahrt nicht behindern, und/oder dass sie Informationen oder Anwendungen anzeigen, die für die geplante Fahrt relevant sind. Die Position des virtuellen Trägers und des Abschnittsbereichs kann auch so festgelegt werden, dass sie sich mit der geplanten Fahrt ändert, beispielsweise, indem sie sich mit der Fahrtrichtung, der Geschwindigkeit, der Position oder anderen Aspekten der Fahrt bewegt. Die Position des virtuellen Trägers und des Abschnittsbereichs kann auch so festgelegt werden, dass sie sich in Abhängigkeit von der Bahnplanung automatisch anpasst, beispielsweise, indem sie sich bei einer Änderung der Bahnplanung entsprechend verschiebt, dreht, vergrößert, verkleinert oder auf andere Weise verändert.

Die Bahnplanung, die in diesem Kontext als die Routenplanung des Fahrzeugs verstanden wird, ist ein umfassender Prozess, der sowohl die Planung von Start bis Ziel als auch die unmittelbare Planung, wie das Ausweichen von Hindernissen auf der Karte, berücksichtigt. Dies bedeutet, dass die Bahnplanung nicht nur die allgemeine Route von einem Ausgangspunkt zu einem Endpunkt umfasst, sondern auch die spezifischen Manöver und Aktionen, die das Fahrzeug während seiner Fahrt ausführen muss, um sicher und effizient sein Ziel zu erreichen. Dies kann beispielsweise ein Ausweichen von Hindernissen, ein Anpassen der Geschwindigkeit an die Verkehrsbedingungen und/oder ein Navigieren durch komplexe Straßennetze umfassen. Die Bahnplanung basiert auf einer Vielzahl von Daten, die aus verschiedenen Quellen stammen können. Dazu gehören beispielsweise Sensordaten, die von den verschiedenen Sensoren des Fahrzeugs erfasst werden, wie z.B. Radar-, Lidar- und/oder Kamerasensoren. Diese Sensordaten können Informationen über die unmittelbare Umgebung des Fahrzeugs liefern, wie z.B. die Position und Bewegung von anderen Fahrzeugen, Fußgängern und/oder Hindernissen, die Beschaffenheit der Straße, die Wetterbedingungen und/oder andere relevante Faktoren.

Zusätzlich oder alternativ zu den Sensordaten kann die Bahnplanung auf Schwarmdaten basieren. Schwarmdaten sind Informationen, die von einer Gruppe von Fahrzeugen gesammelt und geteilt werden, um ein umfassenderes und aktuelleres Bild der Verkehrsbedingungen zu erhalten. Dies kann beispielsweise Informationen über Staus, Unfälle, Straßensperrungen und/oder andere Ereignisse umfassen, die sich auf die Fahrt auswirken könnten.

Beispielsweise fließen auch Verkehrsdaten in die Bahnplanung ein. Diese Daten umfassen beispielsweise Informationen über allgemeinen Verkehrsbedingungen, Verkehrsdichte, Geschwindigkeitsbegrenzungen und/oder andere verkehrsbezogene Faktoren.

Die Position des virtuellen Trägers und des Abschnittsbereichs auf der Anzeigefläche kann in Abhängigkeit von dieser Bahnplanung festgelegt werden, um eine optimale Sicht und Informationsdarstellung für den Fahrer zu gewährleisten.

Der virtuelle Träger kann zumindest zum Teil die Bahnplanung des Fahrzeugs visualisieren. Dies kann beispielsweise durch eine grafische Darstellung der geplanten Fahrtroute, der voraussichtlichen Geschwindigkeit, der voraussichtlichen Fahrtrichtung, der voraussichtlichen Fahrzeit oder anderer Aspekte der geplanten Fahrt erfolgen. Die Visualisierung der Bahnplanung kann in Echtzeit erfolgen und/oder sich in Abhängigkeit von der tatsächlichen Bewegung des Fahrzeugs, verfügbaren Daten und/oder anderen Faktoren ändern. Die Visualisierung der Bahnplanung kann verschiedene Arten von visuellen Elementen, Symbolen, Farben, Animationen und/oder anderen grafischen Techniken verwenden, um die geplanten Fahrtinformationen auf eine klare, verständliche und ansprechende Weise darzustellen. Zumindest ein Teil des virtuellen Trägers kann die Form eines Fahrzeugs aufweisen. Dies kann dazu beitragen, die Visualisierung der Bahnplanung intuitiver und realistischer zu gestalten, indem es dem Fahrer ermöglicht, die geplanten Fahrtinformationen in Bezug auf ein bekanntes und vertrautes Objekt, nämlich das Fahrzeug, zu sehen. Die Form des Fahrzeugs kann beispielsweise eine vereinfachte oder stilisierte Darstellung des tatsächlichen Fahrzeugs, ein generisches Fahrzeugsymbol, eine 3D-Modellierung des Fahrzeugs und/oder eine andere geeignete Darstellung sein. Die Form des Fahrzeugs kann interaktiv sein und verschiedene Arten von Benutzerinteraktionen unterstützen, beispielsweise das Berühren, Ziehen, Drehen, Zoomen und/oder andere Gesten oder Befehle.

Die Darstellung des virtuellen Trägers in Form eines Fahrzeugs bietet eine Reihe von Vorteilen und Möglichkeiten. Eine davon ist die Simulation einer normalen Fahrsituation. In diesem Kontext kann der virtuelle Träger im Wesentlichen als vorausfahrendes Fahrzeug dargestellt werden. Diese Darstellung kann dazu beitragen, dass sich der virtuelle Träger nahtlos in den normalen Straßenverkehr einfügt. Dies kann dazu beitragen, die Wahrnehmung des Fahrers von der Umgebung zu verbessern und die Fahrsicherheit zu erhöhen.

Insbesondere kann das vorausfahrende Fahrzeug als Lastkraftwagen (LKW) dargestellt werden. Diese Darstellung kann dazu beitragen, die nutzbare Fläche für die Darstellung von Anwendungen zu optimieren. Ein LKW hat in der Regel eine größere Fläche als andere Fahrzeuge, was mehr Platz für die Darstellung von Anwendungen bietet. Dies kann dazu beitragen, die Sichtbarkeit und Lesbarkeit der angezeigten Informationen zu verbessern und/oder die Benutzerfreundlichkeit zu erhöhen. Darüber hinaus kann die Darstellung des virtuellen Trägers als vorausfahrendes Fahrzeug dazu beitragen, den positiven Einfluss auf die Vermeidung von Kinetose zu erhalten.

Die Darstellung des virtuellen Trägers kann auf Basis einer Differenzzeit erfolgen. Die Differenzzeit kann beispielsweise die Zeitdifferenz zwischen der aktuellen Zeit und einer zukünftigen Zeit sein, zu der das Fahrzeug voraussichtlich einen bestimmten Punkt auf der geplanten Fahrtroute erreichen wird.

Die Darstellung des virtuellen Trägers auf Basis der Differenzzeit kann dazu beitragen, die Visualisierung der Bahnplanung intuitiver und verständlicher zu gestalten. Beispielsweise kann der virtuelle Träger so positioniert und/oder skaliert werden, dass er die voraussichtliche Position und/oder Größe des Fahrzeugs zu der zukünftigen Zeit darstellt, die der Differenzzeit entspricht. Dies kann dem Fahrer helfen, die geplante Fahrt besser zu verstehen und zu antizipieren, indem er eine visuelle Vorstellung davon bekommt, wo und wann das Fahrzeug voraussichtlich sein wird.

Die Darstellung des virtuellen Trägers auf Basis der Differenzzeit kann auch dazu beitragen, die Fahrsicherheit zu erhöhen. Beispielsweise kann der virtuelle Träger so positioniert und/oder skaliert werden, dass er potenzielle Gefahren oder Hindernisse auf der geplanten Fahrtroute hervorhebt, die das Fahrzeug voraussichtlich zu der zukünftigen Zeit erreichen wird, die der Differenzzeit entspricht. Dies kann dem Fahrer helfen, diese Gefahren oder Hindernisse rechtzeitig zu erkennen und angemessen darauf zu reagieren.

Insbesondere kann die Darstellung des virtuellen Trägers auf Basis der Differenzzeit dazu beitragen, dass sich der Insasse besser auf kommende Manöver des Fahrzeugs einstellen kann. Beispielsweise kann der virtuelle Träger so angepasst werden, dass er eine bevorstehende Baustelle, ein Hindernis und/oder eine andere Situation hervorhebt, die eine Änderung der Fahrtroute oder des Fahrverhaltens erfordert. Dies kann dem Insassen helfen, sich mental auf diese Situationen vorzubereiten und angemessen darauf zu reagieren, was die Fahrsicherheit und den Fahrkomfort erhöht und wiederum die Gefahr der Kinetose verringert.

Die Differenzzeit kann relativ zur Bahnplanung 0 bis 10 Sekunden betragen. Dies bedeutet, dass die Position des virtuellen Trägers und/oder des Abschnittsbereichs auf der Anzeigefläche so festgelegt wird, dass sie die voraussichtliche Position und/oder Größe des Fahrzeugs zu einer zukünftigen Zeit darstellt, die 0 bis 10 Sekunden in der Zukunft liegt. Dies kann auch dazu beitragen, die Fahrsicherheit zu erhöhen, indem es dem Fahrer ermöglicht, auf unerwartete Ereignisse und/oder Veränderungen in der Fahrumgebung schnell und angemessen zu reagieren. Die genaue Dauer der Differenzzeit kann in Abhängigkeit von verschiedenen Faktoren festgelegt werden, beispielsweise der Geschwindigkeit des Fahrzeugs, der Verkehrssituation, der Fahrzeugkonfiguration, den Präferenzen des Fahrers und/oder anderen relevanten Faktoren.

Schritt c) kann ferner umfassen:
- Feststellung, ob ein vorausfahrendes Fahrzeug innerhalb der Bahnplanung des Fahrzeugs fährt,
- und wenn festgestellt wird, dass ein vorausfahrendes Fahrzeug innerhalb der Bahnplanung des Fahrzeugs fährt:
- Übertragung der Darstellung des virtuellen Trägers auf zumindest einen Teil einer Oberfläche des mindestens einen vorausfahrenden Fahrzeugs und Synchronisation mit Bewegungen des vorausfahrenden Fahrzeugs.

Die Feststellung, ob ein vorausfahrendes Fahrzeug innerhalb der Bahnplanung des Fahrzeugs fährt, kann beispielsweise durch Vergleich der Position und/oder Bewegung des vorausfahrenden Fahrzeugs mit der geplanten Fahrtroute des Fahrzeugs erfolgen. Die Position und/oder Bewegung des vorausfahrenden Fahrzeugs kann beispielsweise durch Sensoren des Fahrzeugs, wie Kameras, Radarsensoren, Lidarsensoren oder andere Sensoren, erfasst werden. Die geplante Fahrtroute des Fahrzeugs kann beispielsweise auf Basis von GPS-Daten, Kartenmaterial, Verkehrsdaten, Sensordaten, Fahrzeugdaten oder anderen relevanten Daten berechnet werden.

Die Übertragung der Darstellung des virtuellen Trägers auf zumindest einen Teil einer Oberfläche des mindestens einen vorausfahrenden Fahrzeugs kann beispielsweise durch Überlagerung, Einbettung und/oder andere geeignete Techniken erfolgen. Die Oberfläche des vorausfahrenden Fahrzeugs kann beispielsweise die Rückseite, die Seiten, das Dach, die Fenster und/oder andere sichtbare Teile des vorausfahrenden Fahrzeugs umfassen.

Die Synchronisation mit Bewegungen des vorausfahrenden Fahrzeugs kann beispielsweise durch kontinuierliche Anpassung der Position, Größe, Orientierung, Perspektive und/oder anderer Aspekte der Darstellung des virtuellen Trägers in Übereinstimmung mit den Bewegungen des vorausfahrenden Fahrzeugs erfolgen. Die Bewegungen des vorausfahrenden Fahrzeugs können beispielsweise dessen Geschwindigkeit, Richtung, Beschleunigung, Drehung, Neigung, Schwingung und/oder andere Bewegungen umfassen. Die Synchronisation kann in Echtzeit erfolgen und/oder kann auf Basis von Sensordaten, Fahrzeugdaten, Bahnplanungsdaten und/oder anderen relevanten Daten berechnet werden.

Eine streckenspezifische Höhenveränderung und/oder Unebenheit, welche die Bewegung des vorausfahrenden Fahrzeugs und/oder des virtuellen Trägers visuell beeinflusst, kann bei der Darstellung des virtuellen Trägers berücksichtigt werden. Dies bedeutet, dass die Position, Größe, Orientierung, Perspektive oder andere Aspekte der Darstellung des virtuellen Trägers so angepasst werden können, dass sie die tatsächliche Bewegung des vorausfahrenden Fahrzeugs aufgrund von Höhenveränderungen und/oder Unebenheiten auf der Strecke genau widerspiegeln. Dies kann dazu beitragen, die Fahrsicherheit zu erhöhen, indem es dem Fahrer ermöglicht, potenzielle Gefahren und/oder Hindernisse auf der Strecke rechtzeitig zu erkennen und angemessen darauf zu reagieren.

Die streckenspezifische Höhenveränderung und/oder Unebenheit kann beispielsweise durch Sensoren des Fahrzeugs, wie Kameras, Radarsensoren, Lidarsensoren und/oder andere Sensoren, erfasst werden. Die Höhenveränderung und/oder Unebenheit kann beispielsweise eine Steigung, eine Neigung, eine Kurve, eine Welle, ein Loch, ein Buckel, ein Riss, ein Schlagloch, ein Hindernis und/oder eine andere Unebenheit auf der Strecke sein. Die Höhenveränderung und/oder Unebenheit kann auch auf Basis von GPS-Daten, Kartenmaterial, Verkehrsdaten, Sensordaten, Fahrzeugdaten oder anderen relevanten Daten berechnet und/oder vorhergesagt werden.

Streckenbezogene Warnsignale des vorausfahrenden Fahrzeugs können hervorgehoben dargestellt und/oder simuliert werden. Diese Warnsignale können beispielsweise Blinker, Bremslichter, Warnblinklichter, Nebelschlussleuchten, Rückfahrscheinwerfer und/oder andere Lichter und/oder Signale des vorausfahrenden Fahrzeugs sein, die Informationen über dessen Absichten, Zustand und/oder Verhalten liefern. Die hervorgehobene Darstellung der Warnsignale kann beispielsweise durch eine Vergrößerung, eine Änderung der Farbe, eine Animation, ein Blinken, ein Leuchten, eine Markierung und/oder eine andere visuelle Technik erfolgen, die dazu dient, die Aufmerksamkeit des Fahrers auf die Warnsignale zu lenken. Die Simulation der Warnsignale kann beispielsweise durch eine Nachbildung, eine Imitation, eine Wiedergabe, eine Darstellung und/oder eine andere Technik erfolgen, die dazu dient, die Warnsignale auf der Anzeigefläche des Fahrzeugs sichtbar zu machen, auch wenn sie vom Fahrer nicht direkt gesehen werden können. Die hervorgehobene Darstellung und/oder die Simulation der Warnsignale können dazu beitragen, die Fahrsicherheit zu erhöhen, indem sie dem Fahrer ermöglichen, die Absichten, den Zustand und/oder das Verhalten des vorausfahrenden Fahrzeugs besser zu verstehen und angemessen darauf zu reagieren.

Beispielsweise kann das Bremslicht des vorausfahrenden Fahrzeugs durch Bildbearbeitung verstärkt werden. Dies kann beispielsweise durch eine Vergrößerung der Bremslichter, eine Änderung ihrer Farbe, eine Animation, ein Blinken, ein Leuchten, eine Markierung und/oder eine andere visuelle Technik erfolgen, die dazu dient, die Aufmerksamkeit des Fahrers auf das Bremslicht zu lenken. Auf diese Weise kann sicherstellt werden, dass der Fahrer die Bremsaktion des vorausfahrenden Fahrzeugs nicht übersieht, selbst wenn sie durch die überlagernde Anwendung im virtuellen Träger möglicherweise verdeckt wird.

Darüber hinaus kann das System die Bremslichter des vorausfahrenden Fahrzeugs simulieren, beispielsweise durch eine Nachbildung, eine Imitation, eine Wiedergabe, eine Darstellung oder eine andere Technik, die dazu dient, die Bremslichter auf der Anzeigefläche des Fahrzeugs sichtbar zu machen, auch wenn sie vom Fahrer nicht direkt gesehen werden können. Auf diese Weise kann der Fahrer sich auf eine zukünftige Bremsung einstellen, selbst wenn er die Bremslichter des vorausfahrenden Fahrzeugs nicht direkt sehen kann.

Eine Strecke der Bahnplanung kann auf der Anzeigefläche und/oder dem virtuellen Träger angezeigt werden. Die Strecke der Bahnplanung kann beispielsweise die geplante Fahrtroute des Fahrzeugs, die voraussichtliche Fahrtrichtung, die voraussichtliche Fahrzeit und/oder andere Aspekte der geplanten Fahrt darstellen. Die Strecke der Bahnplanung kann in Form einer Linie, eines Pfades, einer Reihe von Punkten, einer Karte, einer 3D-Darstellung oder einer anderen geeigneten Darstellung angezeigt werden. Die Strecke der Bahnplanung kann auch verschiedene Farben, Muster, Symbole, Texte, Animationen und/oder andere visuelle Elemente verwenden, um verschiedene Aspekte der geplanten Fahrt hervorzuheben und/oder zu kennzeichnen, beispielsweise die voraussichtliche Geschwindigkeit oder die voraussichtliche Fahrtrichtung.

Die Visualisierung der zu erwartenden Bewegungen des Fahrzeugs kann dazu beitragen, die Ablenkung des Fahrers zu minimieren und die Fahrsicherheit zu erhöhen. Sie kann dem Fahrer ermöglichen, die geplante Fahrt und die damit verbundenen Manöver, wie das Ausweichen von Hindernissen, besser zu verstehen und zu antizipieren. Dies kann dazu beitragen, die Reaktionszeit des Fahrers zu verkürzen und mögliche Unfälle oder Kollisionen zu vermeiden.

Der virtuelle Träger und der Abschnittsbereich können konfiguriert sein, ihre Größe durch Vergrößerung und/oder Verkleinerung anzupassen. Dies kann beispielsweise dazu dienen, die Sichtbarkeit, Lesbarkeit und/oder Betrachtbarkeit der im virtuellen Träger angezeigten Informationen und/oder Anwendungen zu verbessern, die Ablenkung des Fahrers zu minimieren, die Fahrsicherheit zu erhöhen und/oder das Fahrerlebnis zu verbessern. Die Größenanpassung des virtuellen Trägers und des Abschnittsbereichs kann automatisch durch das Fahrzeug und/oder manuell durch den Fahrer eingestellt werden. Sie kann auch in Abhängigkeit von der Bewegung des Fahrzeugs, der Blickrichtung des Fahrers, der Priorität der angezeigten Informationen und/oder Anwendungen, der verfügbaren Anzeigefläche, der Fahrzeugkonfiguration oder anderen Faktoren angepasst werden. Die Größenanpassung des virtuellen Trägers und des Abschnittsbereichs kann auch verschiedene Arten von visuellen Effekten, Animationen, Übergängen oder anderen grafischen Techniken verwenden, um die Darstellung ansprechender, dynamischer und/oder realistischer zu gestalten.

Die Anwendung in Schritt d) kann mit einem Transparenzgrad dargestellt werden. Der Transparenzgrad kann beispielsweise so eingestellt werden, dass die Anwendung vollständig opak, vollständig transparent oder dazwischen ist. Die Darstellung der Anwendung mit einem Transparenzgrad kann dazu dienen, bestimmte Informationen oder Anwendungen hervorzuheben oder zu verbergen, die Anzeige an die verfügbare Anzeigefläche anzupassen, die Lesbarkeit oder Sichtbarkeit der Anzeige zu verbessern, die Ablenkung des Fahrers zu minimieren und/oder andere Ziele zu erreichen.

Die Anzeigefläche kann eine Projektionsfläche und/oder mindestens einen Bildschirm umfassen, insbesondere einen Bildschirm, welcher in einer Rückenlehne des Fahrzeugs angeordnet ist. Die Projektionsfläche kann beispielsweise die Windschutzscheibe, eine Seitenscheibe, ein Rückspiegel, eine transparente Fläche und/oder eine andere geeignete Fläche im Fahrzeug oder in seiner Umgebung sein. Der Bildschirm kann beispielsweise ein LCD-Bildschirm, ein LED-Bildschirm, ein OLED-Bildschirm, ein Plasma-Bildschirm, ein E-Paper-Bildschirm, ein Projektor, ein Head-Up-Display und/oder ein anderes geeignetes Anzeigegerät sein. Der Bildschirm kann in das Armaturenbrett, in die Mittelkonsole, in die Türverkleidung, in den Dachhimmel, in die Sonnenblende, in das Lenkrad, in eine Rückenlehne und/oder in eine andere Komponente des Fahrzeuginnenraums integriert sein. Der Bildschirm kann auch ein tragbares Gerät sein, beispielsweise ein Smartphone, ein Tablet, ein Laptop, eine Smartwatch, eine Datenbrille und/oder ein anderes tragbares Gerät, das mit dem Fahrzeug verbunden ist.

Die erfindungsgemäße Aufgabe wird ferner gelöst durch eine Vorrichtung zur Durchführung des Verfahrens umfassend mindestens einen Sensor, mindestens eine Anzeigefläche und mindestens eine Steuerungsvorrichtung.

Der mindestens eine Sensor kann dazu dienen, Daten zu erfassen, die für die Durchführung des Verfahrens benötigt werden.

Die mindestens eine Anzeigefläche kann dazu dienen, die Daten, den virtuellen Träger, den Abschnittsbereich und/oder die Anwendung anzuzeigen. Die Anzeigefläche kann beispielsweise ein Display, ein Head-Up-Display, eine Projektionsfläche und/oder eine Kombination davon sein.

Die mindestens eine Steuerungsvorrichtung kann dazu dienen, die Erfassung der Daten, die Anzeige der Daten, die Festlegung der Position des virtuellen Trägers und des Abschnittsbereichs, die Wiedergabe der Anwendung, die Anpassung der Position des virtuellen Trägers und/oder des Abschnittsbereichs und/oder andere Schritte des Verfahrens zu steuern. Die Steuerungsvorrichtung kann beispielsweise einen Prozessor, einen Speicher, eine Schnittstelle, ein Betriebssystem, eine Software, eine Firmware und/oder andere Komponenten umfassen. Sie kann eine oder mehrere Funktionen zur Datenverarbeitung, zur Signalverarbeitung, zur Bildverarbeitung, zur Kommunikation, zur Benutzerschnittstelle, zur Fahrzeugsteuerung, zur Fahrerassistenz, zur Navigation, zur Unterhaltung, zur Sicherheit, zur Diagnose und/oder andere Funktionen umfassen.

Die erfindungsgemäße Aufgabe wird ferner gelöst durch ein Fahrzeug aufweisend eine solche Vorrichtung. Das Fahrzeug kann beispielsweise ein Pkw, ein Lkw, ein Bus, ein Motorrad, ein Fahrrad, ein Boot, ein Flugzeug, ein Zug, ein landwirtschaftliches Fahrzeug, ein Baufahrzeug, ein Offroad-Fahrzeug, ein autonomes Fahrzeug und/oder ein anderes Fahrzeug sein. Die Vorrichtung kann in das Fahrzeug integriert sein, beispielsweise in das Armaturenbrett, die Mittelkonsole, die Türverkleidung, den Dachhimmel, die Sonnenblende, das Lenkrad, eine Rückenlehne und/oder eine andere Komponente des Fahrzeuginnenraums. Die Vorrichtung kann auch ein tragbares Gerät sein, beispielsweise ein Smartphone, ein Tablet, ein Laptop, eine Smartwatch, eine Datenbrille oder ein anderes tragbares Gerät, das mit dem Fahrzeug verbunden ist. Die Vorrichtung kann dazu dienen, dem Fahrer oder den Passagieren des Fahrzeugs Informationen, Anwendungen, Warnungen, Unterhaltung, Kommunikation, Steuerungsfunktionen oder andere Dienste zur Verfügung zu stellen.

Nachfolgend werden Ausführungsbeispiele der Erfindung anhand der Zeichnungen näher erläutert. Es zeigen:
- Fig. 1: eine schematische Darstellung einer Anzeigefläche eines Fahrzeugs; und
- Fig. 2: ein Ablaufdiagramm eines Verfahrens zum Anzeigen mindestens eines virtuellen Trägers auf mindestens einer Anzeigefläche eines Fahrzeugs.

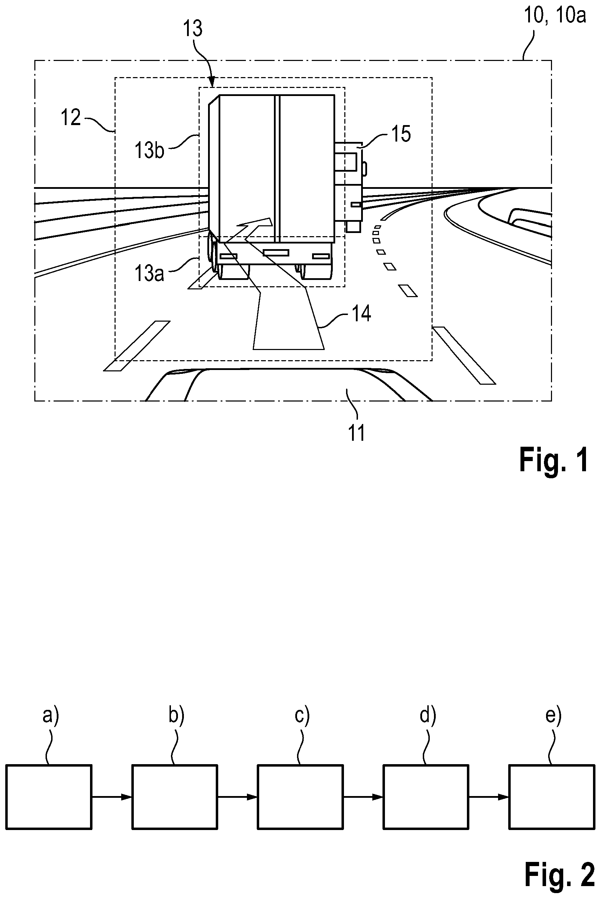

Die Figur 1 zeigt eine schematische Darstellung einer Anzeigefläche eines Fahrzeugs. Die Figur 2 präsentiert ein Ablaufdiagramm eines Verfahrens zum Anzeigen mindestens eines virtuellen Trägers auf mindestens einer Anzeigefläche eines Fahrzeugs.

Die Figur 1 zeigt die Anzeigefläche 10 eines Fahrzeugs 11, wobei die Anzeigefläche 10 als ein Display 10a ausgebildet ist. Die auf dem Display 10a angezeigten Daten sind im Wesentlichen Bilddaten, welche von einem Sensor (nicht gezeigt), insbesondere einer Frontkamera, aufgenommen und in Echtzeit dargestellt werden. Dadurch kann ein Insasse des Fahrzeugs 11 die vorausliegende Straßenführung und/oder den Straßenverkehr beobachten, ohne aus dem Fenster schauen zu müssen. Die Darstellung der Bilddaten der Frontkamera ist dabei fahrzeugfest. Das bedeutet, dass alle Bewegungen des Fahrzeugs 11 in der Bilddarstellung berücksichtigt werden. Des Weiteren ist auf dem Display 10a ein Abschnittsbereich 12 festgelegt. Der Abschnittsbereich 12 umfasst einen virtuellen Träger 13, der in diesem Fall als LKW dargestellt ist. Einen ersten Teilbereich 13a stellt dabei ein Untergestell des LKWs dar, während ein zweiter Teilbereich 13b zur Wiedergabe von Anwendungen vorgesehen ist. Beispielsweise können hier Schreibprogramme oder Multimediaanwendungen angezeigt werden. Der Eindruck eines echten LKWs wird somit erzeugt, wobei auch das Untergestell dargestellt werden kann, um beispielsweise Blinksignale oder andere Warnsignale des LKWs anzuzeigen. Die Größe der Teilbereiche 13a, 13b kann dabei variabel gestaltet werden, sodass die Maße des zweiten Teilbereichs 13b nicht auf die Größe des realistischen Kofferaufbaus eines LKWs beschränkt sind. Die Position des virtuellen Trägers 13 wird kontinuierlich angepasst. Die Position des Abschnittsbereichs 12 und des virtuellen Trägers 13 wird dabei an eine als Pfeil visualisierte Bahnplanung 14 angepasst, wodurch eine Umgebungsfestigkeit gewährleistet wird. In der Figur 1 überholt das Fahrzeug 11 ein vorausfahrendes Fahrzeug 15. Die Bahnplanung 14 wird dabei durch einen Pfeil innerhalb des Abschnittsbereichs 12 angezeigt. Der Insasse kann somit davon ausgehen, dass das Fahrzeug nach links fahren wird. Dies kann zusätzlich betont werden, indem der virtuelle Träger 13 ein Blinksignal simuliert. Der Abstand, in dem der virtuelle Träger 13 auf der Route der Bahnplanung 14 angezeigt wird, kann dabei variiert werden. Beispielsweise kann die Position, an der der virtuelle Träger 13 angezeigt wird, zwei Sekunden in der Zukunft aus der Perspektive des Fahrzeugs 11 liegen. Bei hohen Geschwindigkeiten, wie sie beispielsweise auf Autobahnen gefahren werden, wird eine niedrige Differenzzeit gewählt, während bei niedrigerer Geschwindigkeit, wie etwa in einer 30-Zone, eine hohe Differenzzeit verwendet wird. Dadurch kann ein Szenario entstehen, bei dem der virtuelle Träger 13 nicht mehr realistisch zwischen das Fahrzeug 11 und das vorausfahrende Fahrzeug 15 passt. In diesem Fall besteht die Möglichkeit, den virtuellen Träger 13 auf dem vorausfahrenden Fahrzeug 15 anzuzeigen. Dabei kann der erste Teilbereich 13a zu 100 % transparent angezeigt werden, sodass die Echtzeitbilddaten des vorausfahrenden Fahrzeugs 15 angezeigt werden. Die Anwendung innerhalb des Trägers 13 kann dabei weiterhin im zweiten Teilbereich 13b angezeigt werden.

Figur 2 zeigt einen schematischen Ablauf des Verfahrens. Im ersten Schritt a) werden Bilddaten durch eine Frontkamera des Fahrzeugs 11 erfasst. Im nächsten Schritt, Schritt b), werden die Bilddaten auf einer Anzeigefläche 10, einem Display 10a, im Fahrzeug 11 angezeigt. In einem nächsten Schritt, Schritt c), wird auf Basis der Bahnplanung des Fahrzeugs 11 eine Position eines Abschnittsbereichs 12 und eines virtuellen Trägers 13 festgelegt. So kann beispielsweise die Position des virtuellen Trägers 13 nach links verschoben werden, wenn die Bahnplanung 14 vorsieht, dass das Fahrzeug in eine Linkskurve fährt oder links überholt. Des Weiteren wird in Schritt c) ermittelt, ob sich ein vorausfahrendes Fahrzeug 15 innerhalb der Bahnplanung 14 befindet. Sofern festgestellt wird, dass sich ein solches vorausfahrendes Fahrzeug 15 vor dem Fahrzeug 11 befindet, kann der virtuelle Träger 13 auf das vorausfahrende Fahrzeug 15 übertragen werden. In anderen Worten: Anstelle eines kompletten virtuellen Trägers 13, der auch als Fahrzeug dargestellt werden kann, kommt ein echtes Fahrzeug als virtueller Träger 13 zum Einsatz. In diesem Schritt werden die Bewegungen des virtuellen Trägers 13 mit denen des vorausfahrenden Fahrzeugs 15 synchronisiert. Fährt das vorausfahrende Fahrzeug 15 beispielsweise Schlangenlinien in seiner Fahrspur, folgt der virtuelle Träger 13 diesen Schlangenlinien, da er umgebungsfest am vorausfahrenden Fahrzeug 15 gekoppelt ist. In Schritt d) kann auf dem virtuellen Träger 13 eine Anwendung, beispielsweise eine Multimediaanwendung, angezeigt werden. Ein Beispiel hierfür ist, dass ein Insasse auf dem Rücksitz einen Film schauen möchte, allerdings an Kinetose leidet. Durch die Anzeige des Films in einem Ausschnitt und die Einbeziehung der peripheren Wahrnehmung des Insassen für die Umgebung werden die Symptome der Kinetose verringert. In einem Schritt e) wird die Position des virtuellen Trägers 13 und des Abschnittsbereichs 12 kontinuierlich angepasst, um eine optimale Anpassung an die aktuelle Fahrsituation zu gewährleisten.

### Bezugszeichenliste

- 10: Anzeigefläche
- 10a: Display
- 11: Fahrzeug
- 12: Abschnittsbereich
- 13: virtueller Träger
- 13a: erster Teilbereich
- 13b: zweiter Teilbereich
- 14: Bahnplanung
- 15: vorausfahrendes Fahrzeug

- a) bis e): Verfahrensschritte

## Patentansprüche

1. Verfahren zum Anzeigen mindestens eines virtuellen Trägers (13) auf mindestens einer Anzeigefläche (10) eines Fahrzeugs (11), umfassend die folgenden Schritte:
a) Erfassung von Daten mittels mindestens eines Sensors des Fahrzeugs (11);
b) Anzeige zumindest eines Teils der Daten auf der mindestens einen Anzeigefläche (10, 10a) des Fahrzeugs,
c) Festlegung einer Position eines virtuellen Trägers (13) und eines Abschnittsbereichs (12) auf der mindestens einen Anzeigefläche (10),
d) Wiedergabe von mindestens einer Anwendung innerhalb des virtuellen Trägers (13) und/oder innerhalb des Abschnittsbereichs (12) der Anzeigefläche (10, 10a), und
e) Kontinuierliche Anpassung einer Position des virtuellen Trägers (13) und/oder des Abschnittsbereichs (12) der Anzeigefläche (10).

2. Verfahren gemäß Anspruch 1,
**dadurch gekennzeichnet,**
**dass** die Daten Bilddaten umfassen und/oder dass der mindestens eine Sensor eine Kamera, insbesondere eine Frontkamera, umfasst.

3. Verfahren gemäß einem der vorherigen Ansprüche,
**dadurch gekennzeichnet,**
**dass** die Anzeige zumindest eines Teils der Daten in Schritt b) fahrzeugfest erfolgt, und/oder dass die Darstellung des virtuellen Trägers (13) umgebungsfest erfolgt.

4. Verfahren gemäß einem der vorherigen Ansprüche,
**dadurch gekennzeichnet,**
**dass** die Festlegung der Position des virtuellen Trägers (13) und des Abschnittsbereichs (12) auf der mindestens einen Anzeigefläche (10) abhängig von einer Bahnplanung (14) des Fahrzeugs (11) erfolgt.

5. Verfahren gemäß einem der vorherigen Ansprüche,
**dadurch gekennzeichnet,**
**dass** der virtuelle Träger (13) zumindest zum Teil die Bahnplanung (14) des Fahrzeugs (11) visualisiert,
wobei zumindest ein Teil des virtuellen Trägers (13) die Form eines Fahrzeugs aufweist.

6. Verfahren gemäß Anspruch 4 oder 5,
**dadurch gekennzeichnet,**
**dass** eine Darstellung des virtuellen Trägers (13) auf Basis einer Differenzzeit erfolgt, wobei die Differenzzeit bevorzugterweise relativ zur Bahnplanung (14) 0 bis 10 Sekunden beträgt.

7. Verfahren gemäß Anspruch 4 bis 6,
**dadurch gekennzeichnet, dass** Schritt c) ferner umfasst:
- Feststellung, ob ein vorausfahrendes Fahrzeug (15) innerhalb der Bahnplanung (14) des Fahrzeugs (11) fährt,
- und wenn festgestellt wird, dass ein vorausfahrendes Fahrzeug (15) innerhalb der Bahnplanung (14) des Fahrzeugs (11) fährt:
- Übertragung der Darstellung des virtuellen Trägers (13) auf zumindest einen Teil einer Oberfläche des mindestens einen vorausfahrenden Fahrzeugs (15) und Synchronisation mit Bewegungen des vorausfahrenden Fahrzeugs (15).

8. Verfahren gemäß Anspruch 7,
**dadurch gekennzeichnet,**
**dass** eine streckenspezifische Höhenveränderung und/oder Unebenheit, welche die Bewegung des vorausfahrenden Fahrzeugs (15) visuell beeinflusst, bei der Darstellung des virtuellen Trägers (13) berücksichtigt wird.

9. Verfahren gemäß einem der Ansprüche 4 bis 8,
**dadurch gekennzeichnet, dass** streckenbezogene Warnsignale des vorausfahrenden Fahrzeugs (15) hervorgehoben dargestellt werden und/oder simuliert werden.

10. Verfahren gemäß einem der Ansprüche 4 bis 9,
**dadurch gekennzeichnet, dass** eine Strecke der Bahnplanung (14) auf der Anzeigefläche (10), dem Abschnittsbereich (12) und/oder dem virtuellen Träger (13) angezeigt wird.

11. Verfahren gemäß einem der vorherigen Ansprüche,
**dadurch gekennzeichnet, dass** der virtuelle Träger (13) und der Abschnittsbereich (12) konfiguriert sind, ihre Größe durch Vergrößerung und/oder Verkleinerung anzupassen.

12. Verfahren gemäß einem der vorherigen Ansprüche,
**dadurch gekennzeichnet, dass** die Anwendung in Schritt d) mit einem Transparenzgrad dargestellt wird.

13. Verfahren gemäß einem der vorherigen Ansprüche,
**dadurch gekennzeichnet, dass** die Anzeigefläche (10) eine Projektionsfläche und/oder mindestens ein Display (10a) umfasst, insbesondere ein Display (10a), welches in einer Rückenlehne des Fahrzeugs (11) angeordnet ist.

14. Vorrichtung zur Durchführung eines Verfahrens gemäß einem der vorherigen Ansprüche, wobei die Vorrichtung mindestens einen Sensor, mindestens eine Anzeigefläche (10) und mindestens eine Steuerungsvorrichtung umfasst.

15. Fahrzeug (11) aufweisend eine Vorrichtung gemäß Anspruch 14.
